**Europäisches Patentamt**

**European Patent Office**

**Office européen des brevets**

(19)

(11) Publication number: **0 159 898**
**A2**

## (12) EUROPEAN PATENT APPLICATION

(21) Application number: **85302645.8**

(22) Date of filing: **16.04.85**

(51) Int. Cl.⁴: **A 63 F 9/22**

(30) Priority: **16.04.84 JP 54779/84 U**

(43) Date of publication of application: **30.10.85**
**Bulletin 85/44**

(84) Designated Contracting States: **DE FR GB IT**

(71) Applicant: **KABUSHIKI KAISHA UNIVERSAL, 561, Oaza Arai, Oyama-shi Tochigi-ken (JP)**

(72) Inventor: **Okada, Kazuo c/o Kabushiki Kaisha Universal, 1-7-7 Horidome-cho Nihonbashi, Chuo-ku Tokyo (JP)**

(74) Representative: **Ayers, Martyn Lewis Stanley et al, J.A. KEMP & CO. 14 South Square Gray's Inn, London, WC1R 5EU (GB)**

(54) **Video game apparatus.**

(57) A video game apparatus is provided with a display device for displaying game progress picture images and an operation member manipulated for the game progress. The operation timing for the operation member is judged by a judgement unit as to whether the timing is within a time duration permissible in the game progress, and the success or failure of the game is determined. For a certain time period after the judgement unit starts to operate and check whether the operation member is actuated within the preset time duration or not, a mark is being displayed superposing upon the game progress picture images. The mark is for indicating the time during which the operation member is to be operated. By actuating the operation member while the mark is being displayed, the game success is gained. The mark may be an arrow representation by which the operation direction for the operation member is also displayed.

- 1 -

VIDEO GAME APPARATUS

The present invention relates to a video game apparatus in which success or failure in the game is determined in accordance with the operation by the player acting upon an operation member while looking at a display image, and more particularly it relates to a video game apparatus in which the time duration during which the operation member is to be acted upon is notified to the player.

Generally, in video game apparatuses, the success or failure in the game, which progresses while the player looks at a game image displayed on a cathode ray tube or the like, is determined basing upon the fact that the operation timing is within a preset permissible time duration or the operation direction for the operation member is a preset direction for the game progress.

However, with conventional video game apparatuses, there is a disadvantage that the player is hard to understand in advance what operation timing for the operation member is within the preset timing or which direction for the operation member is the preset direction. In view of this, among such prior art video game apparatuses, there are some apparatuses provided with an operation manual or panel. However, the space required for mounting such a panel is restricted in its dimension since the large panel ruins ornamental design of the game apparatus. Thus, a simple explanation only can be given on the panel. Furthermore, in practice, the actual operations may fully be understood only

0159898

after the game is tried. Therefore, the player, particularly the beginner, often plays the game without fully understanding the operations required for the game progress, so that the player often fails in vain and may loose interest in the game.

It is an object of the present invention to provide a video game apparatus with which even the beginner can retain interest in the game.

It is another object of the present invention to provide a video game apparatus in which the player is notified of the operation timing and operation direction required for the operation member to be acted upon within a preset time duration during the game progress.

In order to achieve the above objects, according to the present invention, the operation timing required for the operation member to be acted upon during the game progress is recognizably notified to the player together with a game progress picture image. According to a preferred embodiment of the present invention, an arrow symbol is arranged to be displayed superposing the game progress image for a preset time duration, the arrow mark being indicative of the operation timing and direction required for the operation member to be acted upon in order to gain a success in the game.

Fig.1 is an outer view of a video game apparatus incorporating the present invention;

Fig.2 is explanatory views of a game success pattern in the video game apparatus according to the present invention;

Fig.3 is explanatory views of a game failure pattern in the video game apparatus according to the present invention; and

Fig.4 is a block diagram showing the main construction of the present invention.

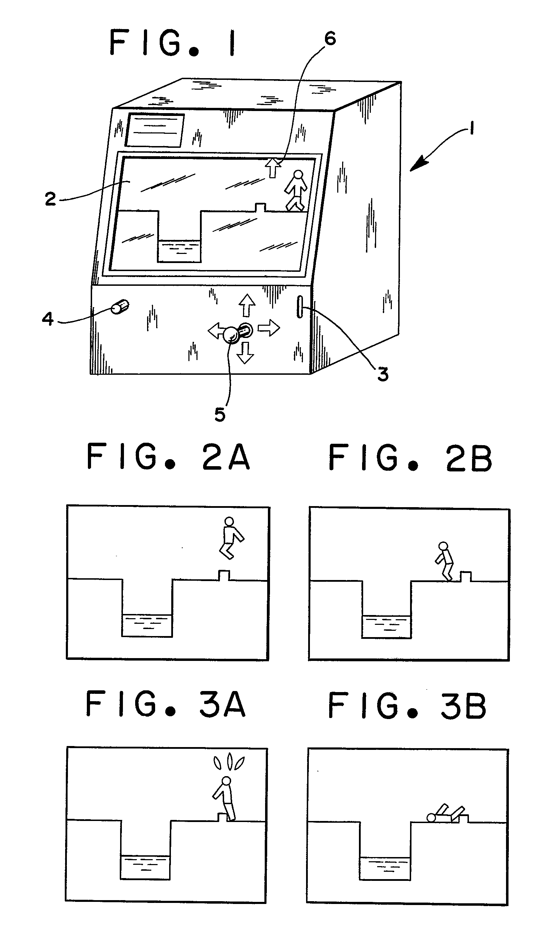

Referring now to Fig.1 wherein a video game apparatus incorporating the present invention is shown, the front face of the apparatus main body 1 has a display plane 2, such as of a cathode ray tube or a screen, for displaying a picture image required for the progress of the game. In addition, on the front face of the apparatus body 1, there are mounted a coin slot 3, start button 4 for initiating a game start as well as an operation lever 5. The video game apparatus as above is initiated to start by the player by inserting a coin or token into the coin slot 3 and depresssing the start button 4. The player then manipulates the operation lever 5 at a timing suitable for the game stage in the proper direction, while observing the game image displayed on the display plane 2.

In the game picture images as shown in Figs.1, 2, and 3, as the game starts, a human character is displayed which moves to walk from the right to the left in the picture. If the operation lever 5 is manipulated in an up-direction within a preset permissible time duration from the time when the game image shown in Fig.1 is displayed, picture images of success patterns as shown in Figs.2(A) and 2(B) are obtained wherein the human character jumps over an extruding obstacle. While on the other hand, if the operation lever 5 is manipulated after the preset permissible time duration or if the operation lever 5 is manipulated in the direction other than the up-direction, then picture images of failure patterns are displayed as shown in Figs.3(A) and 3(B).

The arrow representation 6 shown in Fig.1 is for notifying the player of the operation timing and direction. In particular, in order to gain the success patterns shown in Fig.2, the operation lever 5 must be manipulated within the preset permissible time duration and also in the predetermined direction. In this case, the arrow representation 6 continues to be displayed for the time when the counting for the permissible time duration starts to the time when the permissible time duration elapses. Therefore, observing the game image, the player simply operates the operation lever 5 in accordance with the instruction given by the arrow representation 6 within the time duration from the time when the arrow representation 6 appears to the time when the arrow representation 6 disappears. Consequently, the probability of success in the game can be improved even for the beginner.

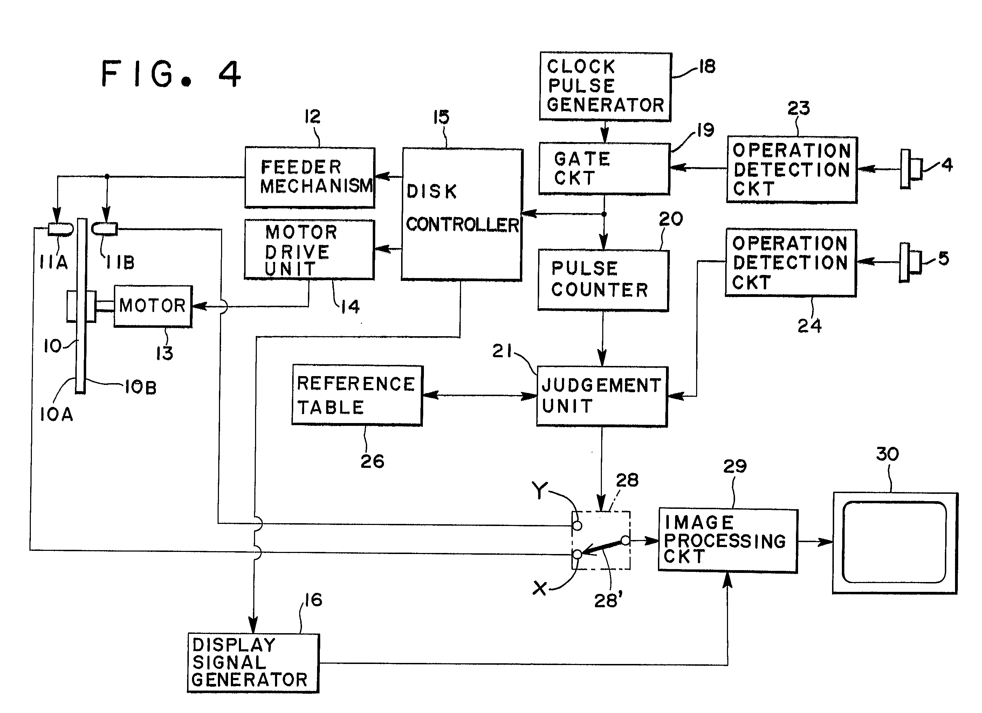

The game progress as described above can be controlled with the arrangement shown in Fig.4 for example. In Fig.4, numeral 10 represents a laser disk which is driven into rotation with a motor 13. One side 10 A of the laser disk 10 is provided with video signals for game success patterns as of Figs.2(A) and 2(B). The other side 10 B is provided with video signals for game failure patterns as of Figs.3(A) and 3(B). The video signals are respectively read out with independently mounted pick-ups 11A and 11B, and transferred to terminals X and Y of a signal change-over circuit 28 described later.

A disk controller 15 controls a feeder mechanism 12 for moving the pick-ups 11A and 11B in the radial direction of the laser disk 10 and controls a motor drive unit 14, thereby setting the number of rotations of the laser disk 10 and controlling the feed amount of the pick-ups 11A and 11B. In addition, the disk controller 15 taking into consideration of the feed amount of the pick-ups 11A and 11B and the like, supplies a signal to a display signal generator at the time instant when the game progress is at a preset time and hence when the operation lever 5 is to be manipulated. Upon reception of the signal, the display signal generator 16 outputs a signal to an image processing circuit 29 described later in order to display the arrow representation 6 (Fig.1) at a definite position on the display plane. In every stage of the game progress, it is common that the operations of the operation lever 5 are performed several times. To this end, the display signal generator 16 made of such as ROMs stores data associated with the arrow symbols suitable for each stage of the game progress and the display positions for the symbols. The data are sequentially used in accordance with the signal from the disk controller 15.

Clock pulses from a clock pulse generator 18 are input to the disk controller 15 and pulse counter 20 via a gate circuit 19. The gate circuit 19 is opened upon reception of a signal from an operation detection circuit 23 which detects the depression of the start button 4. A judgement unit 21 reviews the count value of pulses from a pulse counter 20. At the time instant when the judgement unit 20 is applied with a signal from an operation detection circuit 24 which detects the operation timing and direction of the operation lever 5, the judgement unit 20 compares the operation timing and direction with the stored values of a reference table 26 made of ROMs.

The reference table 26 is stored with data associated with the operations required for the operation lever 5 to be manipulated so as to gain a success of the game. The data include data indicative of that the number of clock pulses from the time of the game start is for example within the range of 10000 to 10100 and data indicative of that the operation direction of the operation lever 5 is an up-direction. If the operation timing and direction are not in correspondence with the data in the reference table 26, then the judgement unit 21 produces a change-over signal to the change-over circuit 28 so that a contact 28' commonly connected to the terminal X is changed to have a connection to the terminal Y. In the case that the operations of the operation lever 5 are performed several times for every stage of the game progress, plural data are stored in the reference table 26 similarly to the case of the above display signal generator 16.

The image processing circuit 29 makes a cathode ray tube 30 display game images in accordance with video signals either from the terminal X or Y.

With the arrangement constructed as above, if the start button 4 is actuated, the disk controller 15 and pulse counter 20 and the like are reset at initial conditions. Thereafter, the gate circuit 20 is opened. Thus, clock pulses from the clock pulse generator 18 are supplied to the disk controller 15, and video signals are read out from the respective pick-ups 11A and

11B. In this case, since the terminal 28' of the change-over circuit 28 is connected to the terminal X, video signals from the pick-up 11A, i.e., video signals representative of the ordinary game progress patterns, are displayed on the CRT 30.

Under progress of the game, if 10000 clock pulses counted from the game start are supplied to the disk controller 15, it is the time to operate the operation lever 5 as particularly shown in Fig.1. At this time instant, since the disk controller 15 delivers a signal to the display signal generator 16, the arrow representation (Fig.1) notifying the operation direction of the operation lever 5 required for the game progress is being displayed on the CRT 30 together with the game image, until the number of clock pulses counted from the game start exceeds 10100 to make the arrow representation 6 disappear.

The judgement unit 21 checks after the game start the number of pulses through the pulse counter 20 while referring to the data in the reference table 26. For the time duration after the clock pulse number reaches 10000 as previously stated and before it reaches 10100, the judgement unit 21 judges whether the operation lever 5 has been manipulated in the preset direction or not. The count operations for the judgement starts at the time when the clock pulse number reaches 10000 and ends at the time when it reaches 10100.

If the operation lever 5 is operated within the above mentioned clock pulse number, the success of the game is gained at that time instant. The pick-up 11A continues to read out the picture image (Fig.2) for the game success pattern stored in the 10A side of the laser disk 10, and succeedingly reads out video signals associated with the following picture images of the game progress for displaying the video signals. The arrow representation 6 disappears at the time instant the game success pattern is displayed.

Alternatively, if the operation lever 5 is manipulated under different conditions from the contents of the data stored in the reference table 26, a change-over signal is output from the judgement unit 21 so that the contact 28' of the signal change-over circuit 28 is connected to the terminal Y. Therefore, the pick-up 11B is enabled to thereby display on the CRT 30 the failure pattern (Fig.3) stored in the other side 10B of the laser disk 10. At this time, if the operation timing of the operation lever 5 is for example within the range of 10000 to 10100 clock pulses, and the operation direction is other than the up-direction, then the arrow representation 6 disappears simultaneously with the display of the failure pattern. Of course, if the operation timing of the operation lever 5 is not in the predetermined direction, then the arrow representation 6 is not displayed on the CRT as yet, or it has already disappeared.

The game progresses in the above manner. If the success is gained, the following game continues in the same manner, and if the failure is met the game terminates to wait for the next game.

Although the present invention has been described in detail with the embodiment shown in the figures, other modifications may be made such as to change the arrow representation 6 into other marks or messages; or to display those representations for a very short time, for example, 1 sec from the count start time of the judgement unit 21. Furthermore, in the game apparatuses in which instead of the operation lever 5 a push button is used to merely contend for the timings of the game, any other marks as desired are applicable in place of the arrow representation 6. Moreover, as the representation of the operation timings of the operation lever 5, the notification by sounds as well as the representation on the display plane is also applicable. The operation timing and direction of the operation lever may be dispensed with in accordance with the degree of difficulties of the game, or the presence or absence of such representation may be selected by the player to thereby arouse deep interest in the game.

0159898

- 10 -

C L A I M S

1. A video game apparatus in which game progress picture images are displayed on a display device in accordance with video signals from a video signal source and the game success or failure is determined based upon whether the operation timing for an operation member actuated referring to the displayed game progress picture images is within a preset time duration or not, comprising:

    operation detection means for detecting the timing when said operation member is actuated;

    storing means for storing said preset time duration;

    judgement means for judging whether the timing obtained from said operation detection means is within said preset time duration or not; and

    mark display means for notifying an operation time duration for said operation member so as to gain the game success by displaying a mark together with said game progress picture image on said display device for a predetermined time from a time instant when said judgement means starts said judgement.

2. A video game apparatus according to claim 1, wherein said mark is made to disappear at the time when said judgement means completes the judgement.

3. A video game apparatus according to claim 1 or 2, wherein said operation detection means is also arranged to detect the operation direction of said operation member, and said judgement means is also arranged to judge whether the operation direction

- 11 -

of said operation member is the direction permissible in the game progress or not, whereby the success or failure of the game is judged.

4. A video game apparatus according to claim 3, wherein said mark also displays the operation direction of the operation member permissible in the game progress.

5. A video game apparatus in which game progress picture images are displayed on a display device in accordance with video signals from a video signal source and the game success or failure is determined based upon whether the operation timing for an operation member actuated referring to the game progress picture images displayed on the display device is within a preset time duration or not, the video game apparatus comprising:

clock pulse generator means for supplying clock pulses to said video signal generator so as to sequentially regenerate video signals for displaying the game progress picture images;

count means for counting said clock pulses;

operation detection means for outputting an operation signal upon the operation of said operation member;

a reference table storing said preset time duration;

judgement means responsive to the output of said operation signal for judging whether the count value of said count means is correspondingly within said preset time duration stored in said reference table or not; and

mark display means, responsive at the time when the number of said clock pulses is correspondingly within said preset time duration stored in said reference table, for displaying a mark on said display device.

6. A video game apparatus according to claim 5, wherein said mark display means displays an arrow mark indicative of the direction to which said operation member is to be operated during the game process.

7. A video game apparatus according to any one of the preceding claims, wherein said video signal source is a video signal regenerator.

8. A video game apparatus according to claim 7, wherein said video signal regenerator is a laser disk video reproducer.

# FIG. 1

# FIG. 2A

# FIG. 2B

# FIG. 3A

# FIG. 3B

# FIG. 4